## Europäisches Patentamt
## European Patent Office
## Office européen des brevets

(11) Publication number: **0 239 345**
**A2**

(12)
# EUROPEAN PATENT APPLICATION

(21) Application number: **87302470.7**

(51) Int. Cl.⁴: **B 60 P 1/46**

(22) Date of filing: **23.03.87**

(30) Priority: **27.03.86 GB 8607850**

(43) Date of publication of application:
**30.09.87 Bulletin 87/40**

(84) Designated Contracting States:
**BE CH DE ES FR GB IT LI NL SE**

(71) Applicant: **WILSON DOUBLE-DECK TRAILERS LIMITED**
**Culcavey**
**Hillsborough County Down, BT26 6JJ Northern Ireland (GB)**

(72) Inventor: **Wilson, Frederick George**
**49 Old Hillsborough Road**
**Lisburn County Antrim Northern Ireland (IE)**

(74) Representative: **Sorrell, Terence Gordon et al**
**Fitzpatricks 4 West Regent Street**
**Glasgow G2 1RS Scotland (GB)**

(54) **Improvements in load carrying vehicles.**

(57) A load carrying vehicle including a lift platform (16) located therewithin arranged so as to be at least moveable between the level of the vehicle body platform level (16c) and substantially ground level (16d). At least one door (15) provides an opening in a side wall of the vehicle to provide such side opening adjacent the lift platform (16). A locking system may be provided to firmly secure the lift platform (16) at the body platform level (16c) during travelling so that no load bearing surface of the vehicle is wasted.

Fig.1.

## Description

IMPROVEMENTS IN LOAD CARRYING VEHICLES

The invention relates to load carrying vehicles and more particularly to such vehicles as trucks, lorries and trailers including integrally located lifts or elevators for loading and mainly unloading goods to and from such vehicles.

There are two main types of rear lifts presently in use both being mounted externally, the first being a cantilever type which is mounted at the rear of the vehicle to the chassis and moves coplanar from ground to body platform level and which is folded vertically for travelling. The second type is a hinged platform which runs in rails mounted vertically to the vehicle body.

A main function of a rear lift is unloading to "High Street" shops and stores and by the nature of the external lift there is a considerable amount of danger to pedestrians and operators when using the lift, by goods falling or rolling off the platform and further it is possible for children to walk underneath the platform.

It is therefore an object of the invention to obviate or mitigate these problems, to enable unloading of such vehicles without opening the rear doors thereof and to be more convenient for the operator.

According to the invention there is provided a load carrying vehicle having a lift platform located therewithin arranged so as to be at least moveable between the level of the vehicle body platform level and substantially ground level and a door opening in a side wall of the vehicle to provide a side opening adjacent the lift platform.

A locking system may be provided to firmly secure the lift platform at the body platform level during travelling so that no load bearing surface of the vehicle is wasted.

The lift platform may have doors or flaps hingedly mounted along the side edges thereof each of which can form a ramp from the lift platform surface to ground level or form a bridge between the lift platform surface and a kerb or pavement. Such doors or flaps retain the goods on the lift platform until it is at ground level and the doors or flaps opened.

The lift platform may be fitted with wire ropes or chains at the four corners thereof for lifting and lowering such platform.

The vehicle may be formed with rear doors and means such that it can be loaded at the rear from ground level or from a loading dock.

The vehicle may comprise a truck, lorry or trailer having double-deck load bearing surfaces.

The foregoing and further features of the invention may be more readily understood from the following description of a preferred embodiment thereof, by way of example, with reference to the accompanying drawings, in which:-

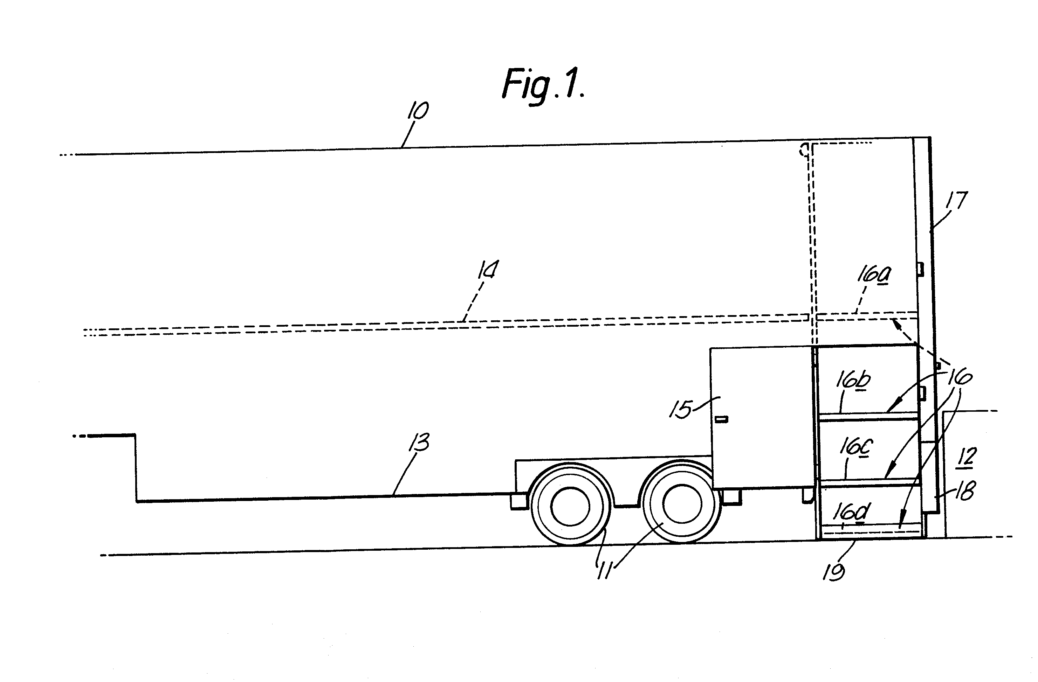

Fig. 1 is a side elevational view of a trailer;

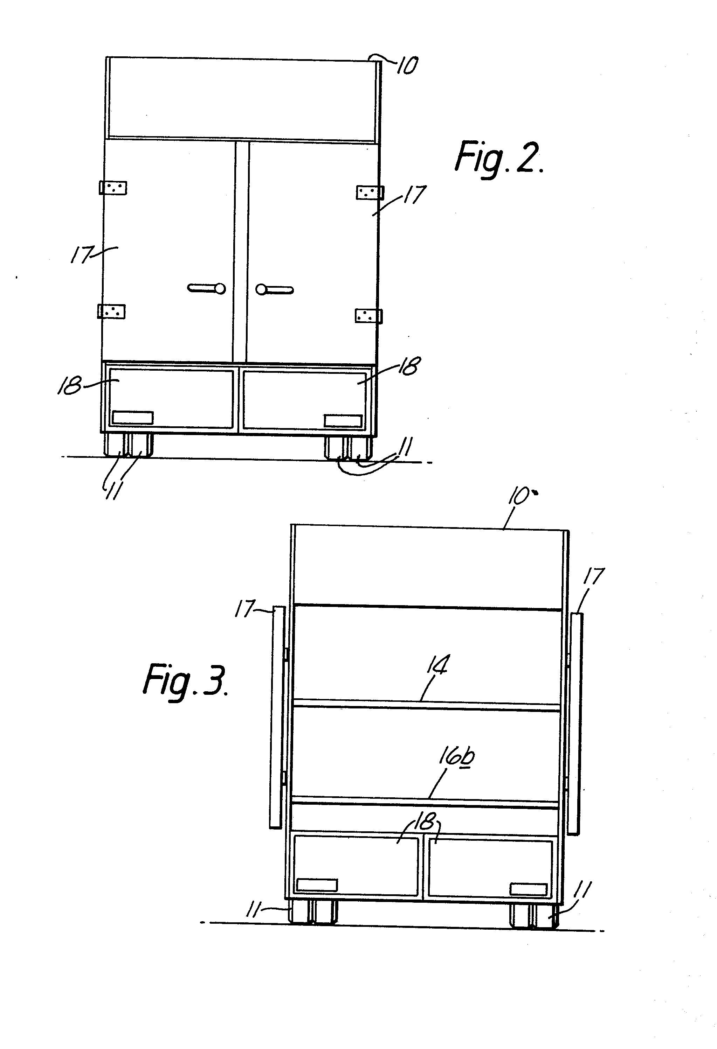

Fig. 2 is a rear elevation view of the trailer of Fig. 1;

Fig. 3 is a similar view to Fig. 2 but with rear doors open, and

Fig. 4 is a similar view to Fig. 2 showing goods being unloaded from a side door.

Referring now to the drawings there is shown a trailer 10 carried on wheels 11, and located adjacent a loading dock 12.

The trailer 10 has a lower load bearing surface 13 and an upper load bearing surface 14. A door 15 is located in the side of trailer 10 adjacent the rear and is shown in its open position.

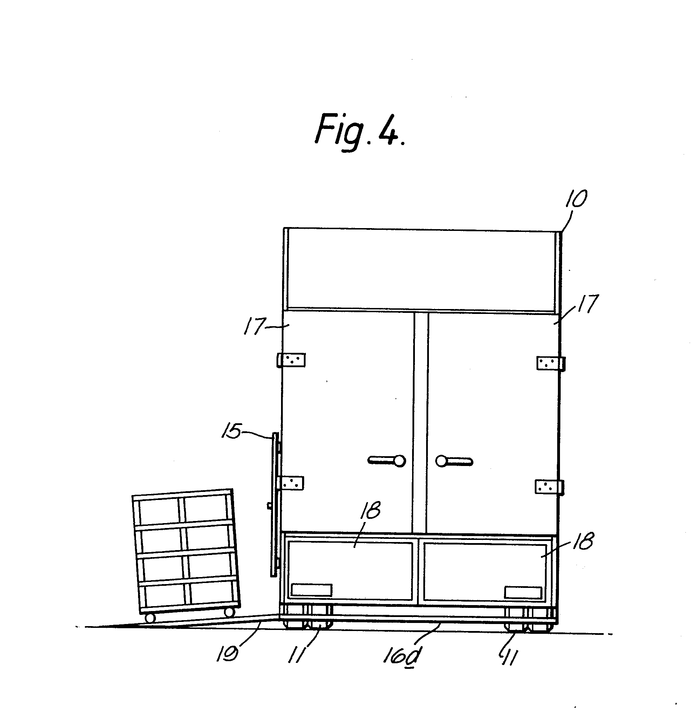

A lift platform 16 is located within the rear of trailer 10 and is moveable between an upper position 16a level with surface 14, a second position 16b level with loading dock 12, a third position 16c level with surface 13 and a final lowermost position 16d level with the ground. A door or flap 19 (Fig. 4) is hinged to each side edge of platform 16 for use when in position 16d. The trailer has two rear doors 17 for use when loading or unloading from a loading dock and a further two lower rear doors 18 may be provided for use when loading or unloading at ground level at the rear.

In use, when travelling, the lift platform 16 is locked in position 16c to maintain the area of load bearing surface 13 at a maximum. When loading or unloading at a loading dock the platform 16 is moved between positions 16b and 16c or 16a. When unloading at a kerbside the platform 16 is moved between positions 16a or 16b and position 16d to enable a load 20 (Fig. 4) to be removed via door 15 at the side of the vehicle.

Hence it will be seen that loads cannot fall from platform 16 or persons be trapped beneath it and loads can be removed directly to a pavement for delivery at a destination.

There may be a door 15 located at both sides of the vehicle. Although the embodiment shown relates to a vehicle with two decks the invention equally applies to a vehicle having a single load carrying platform.

## Claims

1. A load carrying vehicle characterised by a lift platform (16) located therewithin arranged so as to be at least moveable between the level of the vehicle body platform level (16c) and substantially ground level (16d) and at least one door (15) opening in a side wall of the vehicle to provide a side opening adjacent the lift platform (16).

2. A load carrying vehicle as claimed in claim 1 characterised by a locking system to firmly secure the lift platform (16) at the body platform level (16c) during travelling so that no load bearing surface of the vehicle is wasted.

3. A load carrying vehicle as claimed in claim 1 or 2 characterised in that the lift platform (16) has doors or flaps (19) hingedly mounted along the side edges thereof, each of which can form a ramp from the lift platform surface to ground level or form a bridge between the lift platform surface and a kerb or pavement (Fig. 4).

4. A load carrying vehicle as claimed in Claim 3 characterised in that such doors or flaps (19) retain the goods on the lift platform until it is at ground level and the doors or flaps (19) lowered.

5. A load carrying vehicle as claimed in any preceding claim characterised in that the lift platform (16) is fitted with wire ropes or chains at the four corners thereof for lifting and lowering such platform (16).

6. A load carrying vehicle as claimed in any preceding claim characterised in that the vehicle may be formed with rear doors (17) and means (18) such that it can be loaded at the rear from ground level or from a loading dock (12).

7. A load carrying vehicle as claimed in any preceding claim characterised in that the vehicle may comprise a truck, lorry or trailer having double-deck load bearing surfaces (13, 14).

# Fig.1.

0239345

Fig.2.

Fig.3.

## Fig. 4.